# EUROPEAN PATENT SPECIFICATION

(11) **EP 1 085 801 B1**
(45) Date of publication and mention of the grant of the patent: **03.09.2003**
(21) Application number: 99952878.9
(22) Date of filing: 19.10.1999
(51) Int. Cl.: A01B 3/46

(54) **A FULLY MOUNTED PLOUGH ARRANGEMENT**
VOLLAUFSATTELPFLUGANORDNUNG
ARRANGEMENT DE CHARRUE A MONTAGE COMPLET

(30) Priority: 19.10.1998 SE 9803563
(43) Date of publication of application: 28.03.2001
(73) Proprietor: Kongskilde Industries A/S, 4180 Sorö (DK)
(72) Inventor: RÖSLIDEN, Stefan, S-585 93 Linköping (SE)
(74) Representative: Petri, Stellan
(86) International application number: SE9901880
(87) International publication number: WO00022910

(56) References cited:
- DE-B- 1 056 409
- DE-B- 1 253 501
- DE-U- 7 108 472
- GB-A- 752 103
- GB-A- 1 529 512

## Description

### Technical Field

The present invention relates to a support wheel mounting device for a plough arrangement, the wheel mounting device comprising a wheel holder rotatably supporting a wheel and a mounting assembly pivotably attaching the wheel holder to a longitudinal beam of the plough arrangement, as already known from DE-A-1253501.

### Background of the Invention

A tractor carried plough arrangement of the fully mounted type, for example having four ploughs working obliquely after each other in four furrows, may have a support wheel for supporting the arrangement and for controlling the working depth for the ploughs.

At the end of the field to be ploughed the tractor pulling the plough arrangement turns 180° for working on new furrows. Hereby the plough arrangement is pivoted by the tractor 180° around its longitudinal axis, so that a second set of ploughs - previously directed substantially vertically upwards - is put into action in the soil. In this way all furrows on the field will have the same direction, as desired.

When the plough arrangement is pivoted around its axis, the support wheel is made to fall down or turn around in a pendulum movement to a new supporting position. In the prior art design the wheel turns around more or less uncontrolled, resulting in a risk for damages on involved details (when the support wheel holder hits an end stop in a noisy action). Also, the weight of the wheel may vary depending on the environmental conditions (collection of mud and so forth), which in prior designs could lead to another ploughing depth than desired.

The main object of the invention is accordingly to improve the design of the support wheel mounting device for removing the above stated problems.

### The Invention

This is according to the invention attained in that a mounting axle for the pivotable attachment of the wheel holder to the mounting assembly is provided with a brake device for progressively braking a pivotal movement of the mounting axle and thus the wheel holder with its wheel, when it pivots from its position for supporting the plough arrangement in a first ploughing position to its position for supporting the plough arrangement in a second ploughing position 180° pivoted from the first one.

In a preferred embodiment of the invention the mounting axle is provided with a spring biassed brake stack comprising alternating brake washers and brake discs, each brake washer having two protrusions, which are at a certain angular distance from each other and are arranged to be pivotably arrested by a stop member of the mounting assembly. The protrusions of consecutive brake washers are at an increasing angular distance from each other, so that the progressive brake action is obtained.

In a practical case the angular distance for different brake washers may be 40°, 60°, 90°, and 100°. In order to obtain a greater brake torque towards the end of the pendulum movement, there may be two brake washers of the type having the greatest angular distance between its protrusions, in the practical case 100°.

It is preferred that the brake washers are pivotable on the axle and that the brake discs are non-pivotably held to the axle by means of keys. Also, it is preferred that the spring-bias on the brake stack is adjustable, so that adjustment with regard to wear in the brake stack or different ploughing depths can be made.

In order to create the prerequisite of the engagement between the wheel holder and a wheel positioning means on the mounting assembly, the wheel holder has a stop lug for engagement in the ploughing position with a notch in a hook ring rotatable on the mounting axle. The hook ring is in turn provided with catches for engagement with either of two wheel positioning means pivotably attached to the mounting assembly for establishing and maintaining either of the two ploughing positions.

Hitherto, the use of the wheel as a support wheel in the two ploughing positions has been dealt with. However, the wheel may also be used as a transport wheel, when the ploughing arrangement is pivoted 90° and is to be transported for example on a road.

For attaining this the wheel holder may be attached to the mounting axle in a transport position 90° displaced in relation to the ploughing position with the wheel holder stop lug out of engagement with the notch in the hook ring, so that the wheel primarily supporting the plough arrangement during ploughing also functions as a transport wheel with the plough arrangement turned 90°.

### Brief Description of the Drawings

The invention will be described in further detail below under reference to the accompanying drawings, in which
Fig 1 is a side view of a fully mounted plough arrangement with a prior art wheel,
Fig 2 is side view of a wheel mounting device according to the invention,
Fig 3 is a top view, partly in section, of the device shown in Fig 2,
Fig 4 is a top view, partly in section, of a wheel mounting assembly according to the invention,
Fig 5 is a top view of the mounting assembly of Fig 4 with a wheel in a transport position,
Fig 6 is a view corresponding to Fig 5 but with the wheel in a ploughing position, as also shown in Fig 3,
Fig 7 is a top view of a wheel holder,
Fig 8 is a side view of the wheel holder of Fig 7,
Fig 9 is a view taken from the left in Fig 8 of the wheel holder of Fig 7,
Fig 10 is a side view of a mounting bracket with a brake stack, and
Fig 11 is an end view from the left in Fig 10 of the mounting bracket with the brake stack.

### Detailed Description of a Preferred Embodiment

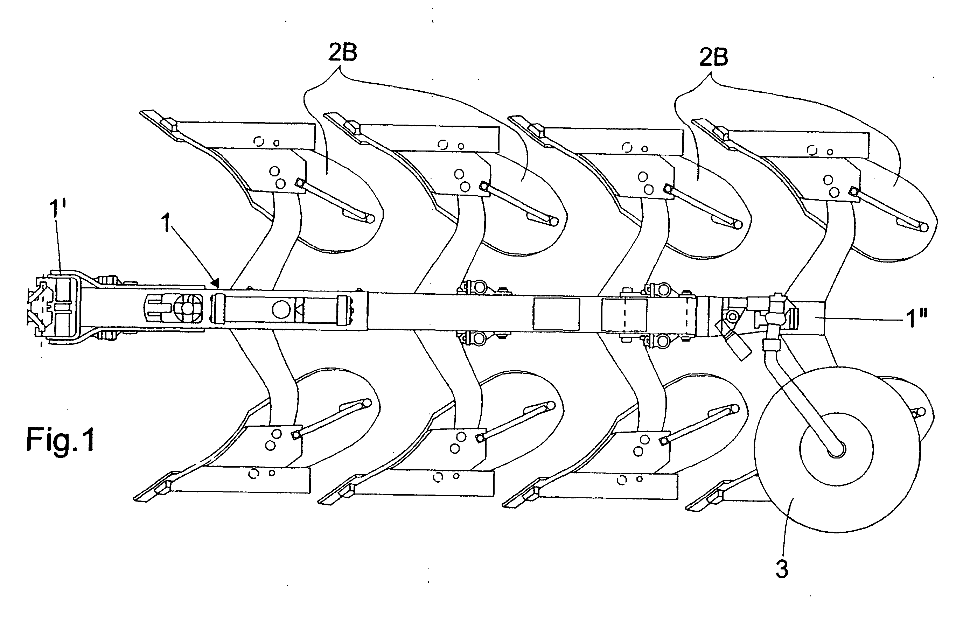

Fig 1 is a side view of a conventional fully mounted plough arrangement 1 to be attached to a tractor (not shown) at a first end 1' and having for example four ploughs 2A arranged obliquely after each other and working up four furrows when pulled by the tractor. The plough arrangement 1 is at a second, free end 1" provided with a support wheel 3, which supports the plough arrangement 1 against the ground but also controls the ploughing depth for the ploughs 2A.

When the tractor reaches the end of the field to be ploughed and turns 180° for commencing the work on new furrows, the entire plough arrangement 1 is pivoted by the tractor 180° around its longitudinal axis, so that a new set of four ploughs 2B gets into action in the soil and creates four new furrows in the same direction as the previous one.

Hereby, the wheel 3 also has to be pivoted for supporting the plough arrangement 1 in its new working position.

If the wheel 3 also is used for supporting the plough arrangement 1 at transport, for example on a road, when the arrangement is pivoted 90° from its position shown in Fig 1, it is called a combi-wheel.

The present invention is directed to such a combi-wheel.

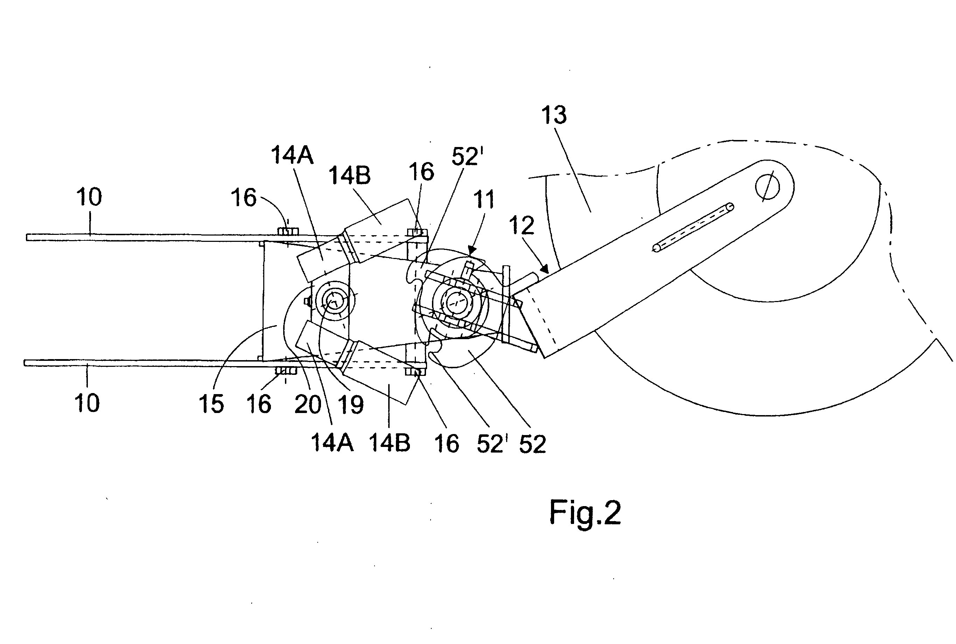

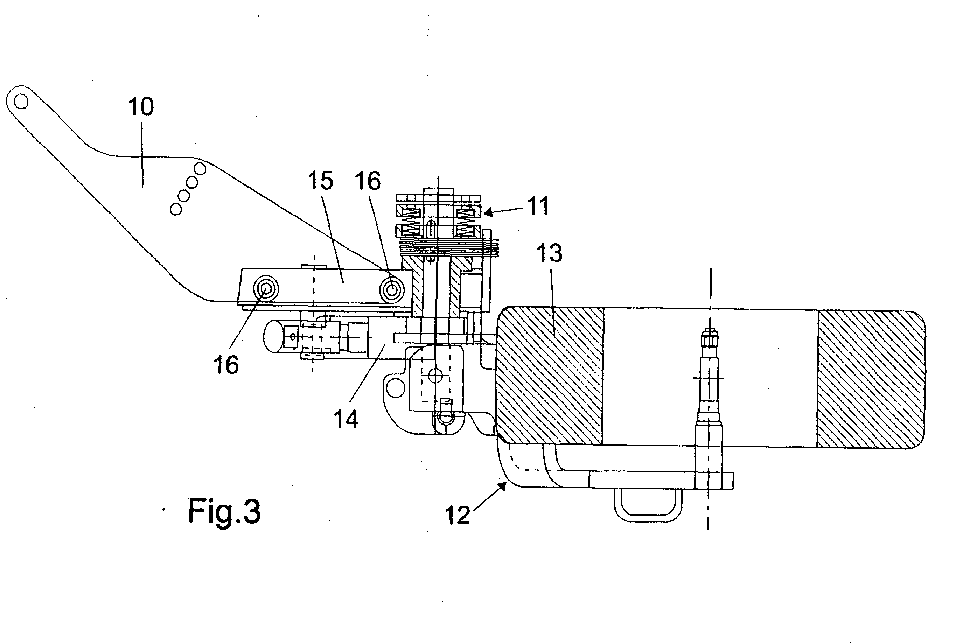

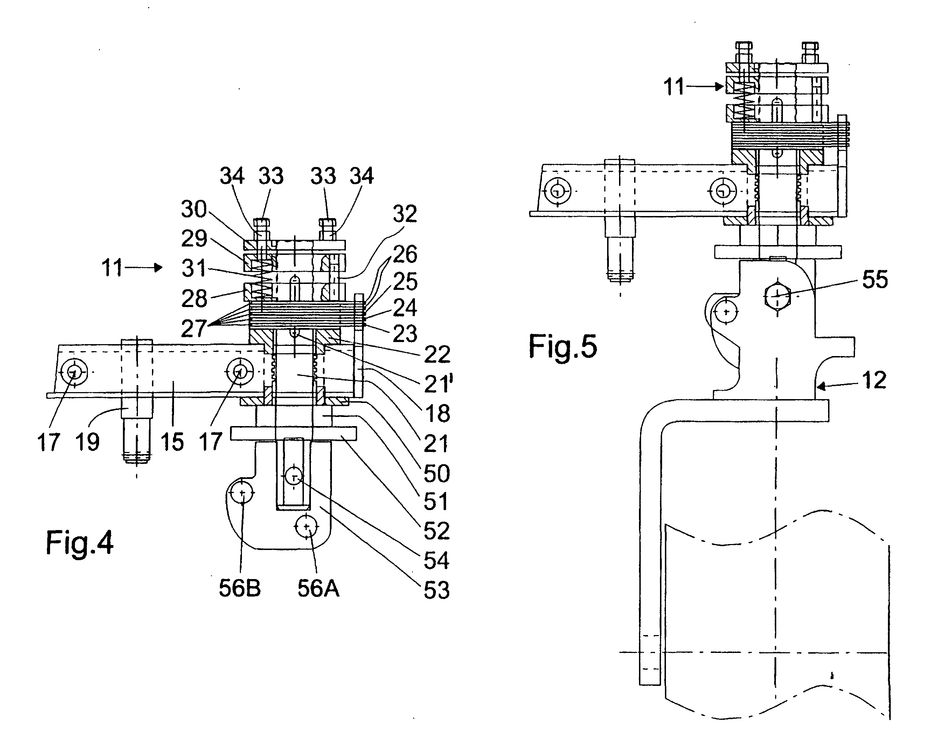

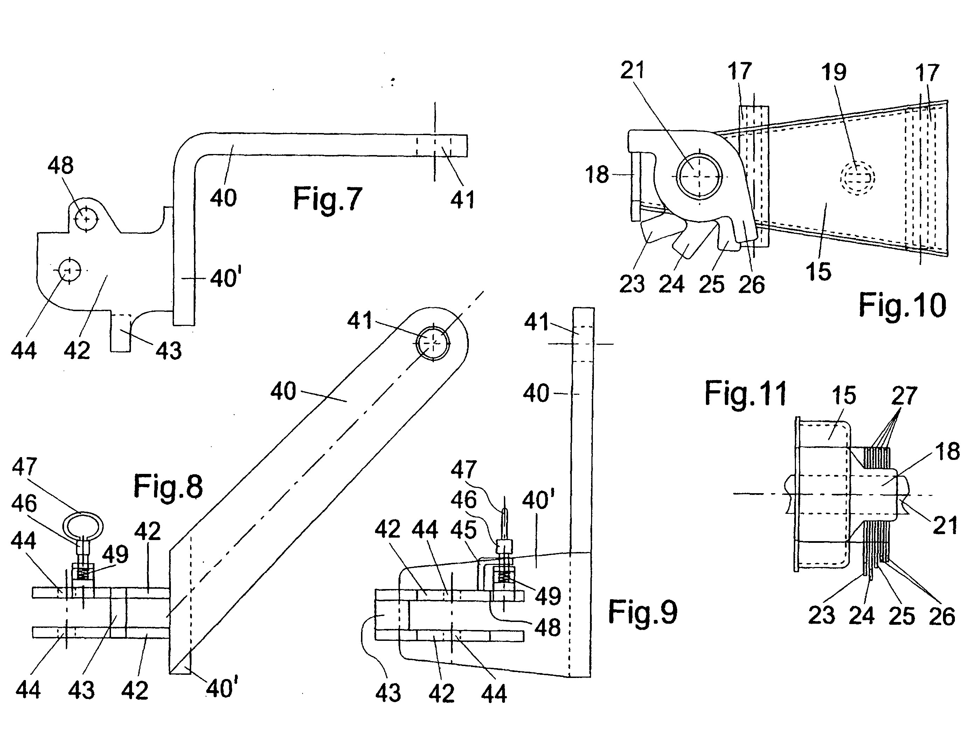

Figs 2 and 3 are overall views of a combi-wheel mounting device according to the invention. The following main portions of the device are shown: attachment brackets 10, a mounting assembly 11 (to be further described under reference to Fig 4 and others), a wheel holder 12 (further shown in Figs 7-9), and a wheel 13 rotatably supported by the wheel holder 12. Also shown in Figs 2 and 3 are wheel positioning means 14.

The attachment brackets 10 are fastened to a mounting bracket 15 of the mounting assembly 11 by means of screws 16 in mounting bracket attachments 17 (Figs 4 and 10). The attachment brackets 10 are to be fastened to a longitudinal main beam of the plough arrangement 1, as is shown in Fig 1, preferably by screw joints.

The mounting assembly 11 is depicted in its entirety in Fig 4, but reference is also made to Figs 10 and 11 showing the mounting bracket 15 with certain accompanying details. Especially, in Figs 10 and 11 a stop member 18, also shown in Fig 4, is shown welded to the end of the mounting bracket 15.

The mounting bracket 15, which has the form of a welded plate-box, is also provided with a pivot axle 19 for the pivotal mounting of a bridge 20 provided with the two wheel positioning means 14 for a purpose to be described below.

The mounting assembly 11 has a mounting axle 21 extending pivotally through the mounting bracket 15. It is guided for pivotal movements by means of a sleeve 22.

A stack of interposed brake washers 23-26 and brake discs 27 is arranged around the mounting axle 21 on the sleeve 22 and is accordingly called a brake stack 23-27. The brake washers 23-26 are freely pivotable on the axle 21, whereas the brake discs 27 are non-pivotably held to the mounting axle 21 by means of keys 21', for example three equidistantly positioned keys around the axle.

The different brake washers 23-26 are shown in Figs 10 and 11. Each brake washer is provided with two protrusions for engagement with the stop member 18. In Figs 10 and 11 the brake washers 23-26 are all shown in one end position with their upper protrusion in engagement with the stop member 18. The geometry in this example is such that the respective brake washers 23-26 may pivot 40°, 60°, 90°, and 100°, before their other protrusion hits the stop member 18. For a purpose to be described there may be provided two brake washers 26 with a pivot angle of 100°.

The purpose of the stack of brake washers 23-26 and brake discs 27 is to apply a brake torque on the mounting shaft 21 at the pivoting movement thereof occurring when the plough arrangement is turned for starting new furrows and the wheel 13 turns over from one end position to the other. A certain pressure has to be applied on the brake stack in order to create a friction force and brake torque. This pressure shall be adjustable for compensating for wear in the stack or for different ploughing depths. The adjustable pressure is obtained by means of the following arrangement.

A ring-shaped inner spring ring 28 is arranged on the stack 23-27, followed by a ring-shaped outer spring ring 29 and a locking ring 30 in thread engagement with the end of the mounting axle 21. A number of compression springs 31, for example six to eight, are arranged in appropriate cavities in the surfaces facing each other of the spring rings 28, 29. The two spring rings 28, 29 may be held against mutual rotation by means of for example four guide pins 32. The inner spring ring 28 is free on the axle 21, whereas the outer spring ring 29 is in thread engagement with the end of the axle 21. The purpose of the locking ring 30 is to prevent the outer spring ring 29 from unthreading at the movements and vibrations of the device. The locking ring 30 is provided with two bores for screws 33 threadingly engaging the outer spring ring 29. Each screw 33 is provided with a lock nut 34, which is tightened against the locking ring 30 and accordingly locks the brake stack 23-27. An increased prestress from the springs 31 is obtained by turning the upper spring ring 29 in thread engagement with the axle 21.

When a pendulum movement of the wheel 13 starts at a plough turning and the axle 21 starts to pivot or rotate, the first brake washer 23 hits the stop member 18 after a pivot movement of 40°. Thereby the brake washer 23 is immobilized in relation to the axle 21, so that friction occurs between the brake discs 27 and the first brake washer 23. During the continued pivotal movement of the axle 21 further brake washers 24-26 hit the stop member 18, so that the friction torque progressively increases due to the increasing number of friction surfaces. For obtaining an even more increased brake torque towards the end of the pendulum movement there are two brake washers 26 with an opening angle of 100°.

The wheel holder 12, shown in Figs 7-9, has the following design:

An angled arm 40 has at its free end a hole 41 for the rotational attachment of the wheel 13. At its base flange 40' the arm 40 is provided with two ears 42, being connected by means of a stop lug 43. The ears 42 have coaxial through holes 44 for the pivotal engagement of the wheel holder 12 to the mounting assembly 11 in a way to be described.

For enabling a transition of the wheel holder 12 from a ploughing position to a transport position one of the ears 42 is provided with a spring-biassed pin arrangement, most clearly shown in Fig 9. In a pin holder 45 attached to one of the ears 42 a pin 46 with a pin ring 47 is slidably arranged in a hole 48 in the ear 42, downwardly biassed in Figs 8 and 9 by a compression spring 49.

The design of the mounting assembly 11 at the opposite side of the mounting bracket 15 in relation to the brake stack 23-27 is as follows:

The sleeve 22 is at its end protruding from the mounting bracket 15 provided with an attachment washer 50. Cooperating therewith and arranged around the axle 21 is a bearing ring 51, preferably of a plastic material. Following thereon is a hook ring 52. At its end protruding from the hook ring 52 the axle 21 is provided with an attachment ear 53. The axle end has a through hole 54 corresponding to the holes 44 in the wheel holder ears 42. For pivotal attachment of the wheel holder 12 to the mounting assembly 11, as is for example shown in Fig 5, a screw 55 is inserted through the holes 44, 54 and fastened by a nut.

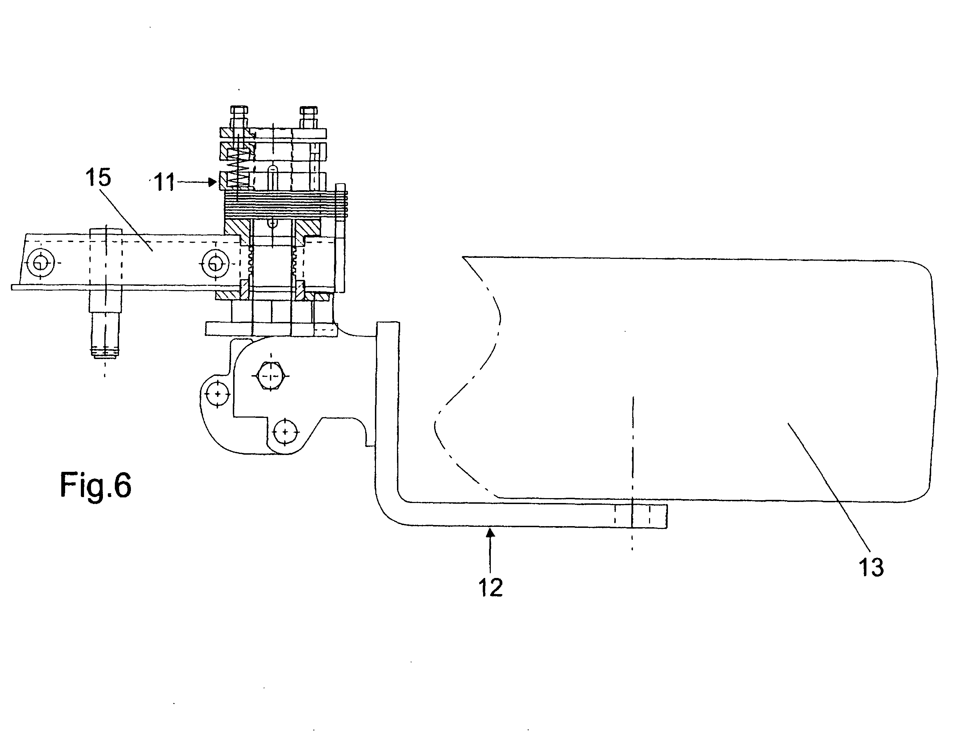

The attachment ear 53 is provided with two bores 56A and 56B for engagement by the spring-biassed pin 46 of the wheel holder 12. In the ploughing position shown in Fig 6 said pin 46 is in engagement with the bore 56A and in the transport position shown in Fig 5 with the bore 56B.

In the ploughing position shown in Fig 6 the stop lug 43 of the wheel holder 12 is in engagement with a notch of the hook ring 52, which accordingly is held stationary in relation to the axle 21. The ears 42 are in engagement with the hook ring 52 and form the support for the spring-biassed brake stack 23-27 on the other side of the mounting bracket 15.

In the transport position shown in Fig 5 the stop lug 43 is brought out of engagement with the notch of the hook ring 52, and there is shown a small gap between the ears 42 and the hook ring 52. This gap depends on the geometry of the ears 42 and means that in the transport position the axle 21 can move somewhat upwards in the drawing under the action of the springs 31, so that the pressure applied on the brake stack 23-27 is decreased.

Each of the two wheel positioning means 14 provided on the pivotable bridge 20 mainly consists of two parts, namely a screw member 14A, attached to the bridge 20 and having an external thread, and an adjusting sleeve 14B with an internal thread for enabling the total length of each wheel positioning means 14 to be adjusted for controlling the pivotal position of the wheel 13 and thus the working depth for the ploughs 2A and 2B, respectively.

The adjusting sleeves 14B engage with either one of two hooks or catches 52' (Fig 2) provided on the hook ring 52. The engagement is not specifically illustrated for the inventive embodiment of Figs 2-11, where especially Fig 2 shows the details in an intermediate position with no adjusting sleeve 14B engaging any catch. A better illustration is given in Fig 1, showing a prior art arrangement.

Here the upper adjusting sleeve is in engagement with a suitable part of a wheel holder, holding the wheel in a certain position. When the plough arrangement 1 is pivoted for bringing the opposite ploughs 2B into engagement with the soil, the whole wheel positioning means including its pivoting bridge will pivot to its second position and the wheel 3 will turn around to its new position for supporting the ploughs 2B. Hereby the second adjusting sleeve will engage the wheel holder part.

Many modifications are possible within the scope of the appended claims. Especially it should be noted that the disclosure is directed to a combi-wheel, i.e. a wheel both for supporting the plough arrangement in either of two ploughing positions and for road transport. However, a wheel not being provided with the means enabling the use as a transport wheel falls within the scope of the claims.

## Claims

1. A support wheel mounting device for a plough arrangement (1), the wheel mounting device comprising a wheel holder (12) rotatably supporting a wheel (13) and a mounting assembly (11) pivotably attaching the wheel holder to a longitudinal beam of the plough arrangement, **characterized in that** a mounting axle (21) for the pivotable attachment of the wheel holder (12) to the mounting assembly (11) is provided with a brake device (23-27) for progressively braking a pivotal movement of the mounting axle and thus the wheel holder with its wheel (13), when it pivots from its position for supporting the plough arrangement in a first ploughing position to its position for supporting the plough arrangement in a second ploughing position 180° pivoted from the first one.

2. A device according to claim 1, **characterized in that** the mounting axle (21) is provided with a spring biassed brake stack (23-27) comprising alternating brake washers (23-26) and brake discs (27), each brake washer having two protrusions, which are at a certain angular distance from each other and are arranged to be pivotably arrested by a stop member (18) of the mounting assembly (11).

3. A device according to claim 2, **characterized in that** the protrusions of consecutive brake washers (23-26) are at an increasing angular distance from each other.

4. A device according to claim 3, **characterized in that** the angular distance for different brake washers (23-26) is 40°, 60°, 90°, and 100°.

5. A device according to claim 3, **characterized in that** there are two brake washers (26) of the type having the greatest angular distance between its protrusions.

6. A device according to claim 2, **characterized in that** the brake washers (23-26) are pivotable on the axle (21) and that the brake discs (27) are non-pivotably held to the axle by means of keys (21').

7. A device according to claim 2, **characterized in that** the spring-bias is adjustable.

8. A device according to claim 1, **characterized in that** the wheel holder (12) has a stop lug (43) for engagement in the ploughing position with a notch in a hook ring (52) rotatable on the mounting axle (21).

9. A device according to claim 8, **characterized in that** the hook ring (52) is provided with catches (52') for engagement with either of two wheel positioning means (14) pivotably attached to the mounting assembly (11) for establishing and maintaining either of the two ploughing positions.

10. A device according to claim 8, **characterized in that** the wheel holder (12) may be attached to the mounting axle (21) in a transport position 90° displaced in relation to the ploughing position with the wheel holder stop lug (43) out of engagement with the notch in the hook ring (52), so that the wheel (13) primarily supporting the plough arrangement (1) during ploughing also functions as a transport wheel with the plough arrangement turned 90°.

11. A device according to claim 10, **characterized in that** the spring bias on the brake stack (23-27) is decreased in the transport position.

## Patentansprüche

1. Stützrad-Lagervorrichtung für eine Pfluganordnung (1), wobei die Rad-Lagervorrichtung einen Radhalter (12), der ein Rad (13) drehbar trägt, und eine Lageranordnung (11), die den Radhalter schwenkbar an einem Längsträger der Pfluganordnung haltert, aufweist, **dadurch gekennzeichnet, daß** eine Lagerachse (21) für die schwenkbare Anbringung des Radhalters (12) an der Lageranordnung (11) mit einer Bremseinrichtung (23-27) ausgestattet ist, um eine Schwenkbewegung der Lagerachse und mithin des Radhalters zusammen mit dessen Rad progressiv abzubremsen, wenn der Radhalter aus seiner Position zum Abstützen der Pfluganordnung in einer ersten Pflügestellung in seine Position zum Abstützen der Pfluganordnung in einer zweiten Pflügestellung, die gegenüber der ersten Pflügestellung um 180° verdreht ist, verschwenkt wird.

2. Vorrichtung nach Anspruch 1, **dadurch gekennzeichnet, daß** die Lagerachse (21) mit einem mittels Feder vorgespannten Bremsstapel (23-27) ausgestattet ist, umfassend einander abwechselnde Brems-Beilagscheiben (23-26) und Bremsscheiben (27), von denen jede Brems-Beilagscheibe zwei Vorsprünge aufweist, die einen gewissen Winkelabstand voneinander haben und so angeordnet sind, daß sie bei einer Schwenkbewegung durch ein Anschlagelement (18) der Lagerungsanordnung (11) angehalten werden.

3. Vorrichtung nach Anspruch 2, **dadurch gekennzeichnet, daß** die Vorsprünge aufeinanderfolgender Brems-Beilagscheiben (23-26) voneinander einen zunehmend größeren Winkelabstand haben.

4. Vorrichtung nach Anspruch 3, **dadurch gekennzeichnet, daß** der Winkelabstand für verschiedene Brems-Beilagscheiben (23-26) 40°, 60°, 90° und 100° beträgt.

5. Vorrichtung nach Anspruch 3, **dadurch gekennzeichnet, daß** es zwei Brems-Beilagscheiben (26) des Typs mit dem größten Winkelabstand zwischen ihren Vorsprüngen gibt.

6. Vorrichtung nach Anspruch 2, **dadurch gekennzeichnet, daß** die Brems-Beilagscheiben (23-26) auf der Achse (21) drehbar sind, und daß die Bremsscheiben (27) mit Hilfe von Keilen (21') nicht-drehbar an der Achse gehalten werden.

7. Vorrichtung nach Anspruch 2, **dadurch gekennzeichnet, daß** die Feder-Vorspannung einstellbar ist.

8. Vorrichtung nach Anspruch 1, **dadurch gekennzeichnet, daß** der Radhalter (12) eine Anschlaglasche (43) aufweist, die in der Pflügestellung mit einer Kerbe in einem Hakenring (52) in Eingriff tritt, der drehbar an der Lagerachse (21) angeordnet ist.

9. Vorrichtung nach Anspruch 8, **dadurch gekennzeichnet, daß** der Hakenring (52) mit Klauen (52') für den Eingriff mit einer von zwei Radpositioniereinrichtungen (14) ausgestattet ist, wobei letztere drehbar an der Lageranordnung (11) befestigt sind, um eine der beiden Pflügestellungen zu erreichen und aufrecht zu erhalten.

10. Vorrichtung nach Anspruch 8, **dadurch gekennzeichnet, daß** der Radhalter (12) an der Lagerachse (21) in einer Transportstellung befestigbar ist, die gegenüber der Pflügestellung um 90° versetzt ist, wobei die Radhalter-Anschlaglasche (43) von der Kerbe in dem Hakenring (52) gelöst ist, so daß das Rad (13), welches hauptsächlich die Pfluganordnung (1) während des Pflügens abstützt, auch als Transportrad fungiert, wenn die Pfluganordnung um 90° gedreht ist.

11. Vorrichtung nach Anspruch 10, **dadurch gekennzeichnet, daß** die Vorspannung an dem Bremsstapel (23-27) in der Transportstellung verringert ist.

## Revendications

1. Dispositif de montage d'une roue de support pour un agencement (1) de charrue, le dispositif de montage de roue comprenant un support (12) de roue supportant en rotation une roue (13) et un ensemble (11) de montage reliant de manière pivotante le support de roue à une poutre longitudinale de l'agencement de charrue, **caractérisé en ce qu'**un essieu (21) de montage de liaison pivotante du support (12) de roue et de l'ensemble (11) de montage est pourvu d'un dispositif (23 - 27) de frein destiné à freiner progressivement un mouvement de pivotement de l'essieu de montage et, ainsi, du support de roue et de sa roue (13), lorsqu'il pivote de sa position de support de l'agencement de charrue, dans une première position de charruage, à sa position de support de l'agencement de charrue dans une seconde position de charruage pivotée de 180° par rapport à ladite première position.

2. Dispositif selon la revendication 1, **caractérisé en ce que** l'essieu (21) de montage est pourvu d'une pile (23 - 27) de frein rappelée par ressort comprenant des rondelles (23 - 26) de frein et des disques (27) de frein alternés, chaque rondelle de frein comportant deux saillies qui se trouvent à une certaine distance angulaire l'une de l'autre et qui sont agencées pour être arrêtées par pivotement par un élément (18) de butée de l'ensemble (11) de montage.

3. Dispositif selon la revendication 2, **caractérisé en ce que** les saillies des rondelles (23 - 26) de frein se trouvent, l'une par rapport à l'autre, à une distance angulaire qui va en augmentant.

4. Dispositif selon la revendication 3, **caractérisé en ce que** la distance angulaire de rondelles (23 - 26) de frein différentes est de 40°, 60°, 90° et 100°.

5. Dispositif selon la revendication 3, **caractérisé par** la présence de deux rondelles (26) de frein du type ayant la distance angulaire la plus grande entre leurs saillies.

6. Dispositif selon la revendication 2, **caractérisé en ce que** les rondelles (23 - 26) de frein peuvent pivoter sur l'essieu (21) et **en ce que** les disques (27) de frein sont maintenus non pivotants sur l'essieu au moyen de goupilles (21').

7. Dispositif selon la revendication 2, **caractérisé en ce que** le rappel de ressort est réglable.

8. Dispositif selon la revendication 1, **caractérisé en ce que** le support (12) de roue comporte une patte (43) de butée pour engagement, dans la position de charruage, avec une encoche réalisée dans un anneau (52) d'accrochage mobile en rotation sur l'essieu (21) de montage.

9. Dispositif selon la revendication 8, **caractérisé en ce que** l'anneau (52) d'accrochage est pourvu de crans d'arrêt (52') destinés à engager avec l'un ou l'autre de deux moyens (14) de positionnement de roue reliés pivotants à l'ensemble (11) de montage dans le but d'établir et de maintenir l'une ou l'autre des deux positions de charruage.

10. Dispositif selon la revendication 8, **caractérisé en ce que** le support (12) de roue peut être lié à l'essieu (21) de montage dans une position de transport décalée de 90° par rapport à la position de charruage, la patte (43) de butée de support de roue étant dégagée de l'encoche réalisée dans l'anneau (52) d'accrochage, de sorte que la roue (13) supportant principalement l'agencement (1) de charrue pendant le charruage sert également de roue de transport, l'agencement de charrue étant tourné de 90°.

11. Dispositif selon la revendication 10, **caractérisé en ce que** le rappel de ressort de la pile (23 - 27) de frein est moindre dans la position de transport.
